# EUROPÄISCHE PATENTSCHRIFT

(11) **EP 0 668 987 B1**
(45) Veröffentlichungstag und Bekanntmachung des Hinweises auf die Patenterteilung: **28.04.1999**
(21) Anmeldenummer: 94925468.4
(22) Anmeldetag: 23.08.1994
(51) Int. Cl.: G01B 7/00, G01B 3/00, G01B 7/012

(54) **KOORDINATENMESSGERÄT MIT EINEM TASTER IN FORM EINES FESTKÖRPERSCHWINGERS**
CO-ORDINATE MEASURING INSTRUMENT WITH A FEELER IN THE FORM OF A SOLID BODY OSCILLATOR
APPAREIL DE MESURE DE COORDONNEES POURVU D'UN PALPEUR SE PRESENTANT SOUS FORME D'OSCILLATEUR MONOLITHIQUE

(30) Priorität: 13.09.1993 DE 4331069
(43) Veröffentlichungstag der Anmeldung: 30.08.1995
(60) Teilanmeldung: 98110602.4
(73) Patentinhaber: CARL-ZEISS-STIFTUNG, HANDELND ALS CARL ZEISS, 89518 Heidenheim (Brenz) (DE); CARL ZEISS, 89518 Heidenheim (Brenz) (DE)
(72) Erfinder: SCHEPPERLE, Karl, 73447 Oberkochen (DE)
(86) Internationale Anmeldenummer: EP9402788
(87) Internationale Veröffentlichungsnummer: WO9508093

(56) Entgegenhaltungen:
- EP-A- 0 605 140
- WO-A-89/00672
- WO-A-92/08102
- DE-A- 4 204 602
- DE-A- 4 243 284
- DE-U- 9 115 942
- DE-U- 9 213 059
- FR-A- 2 468 875
- GB-A- 2 070 249
- US-A- 4 177 568

## Beschreibung

In letzter Zeit sind Taster für Koordinatenmeßgeräte bekannt geworden, die nur eine sehr geringe Meßkraft von weniger als 1 mN auf das zu vermessende Werkstück ausüben und mit einem sogenannten Festkörperschwinger arbeiten, dessen Schwingungsamplitude sich bei Annäherung an das zu vermessende Objekt ändert. Ein derartiger Taster ist beispielsweise in dem deutschen Gebrauchsmuster 92 13 059 beschrieben.

Dieser bekannte Taster besitzt einen dünnen Glasstab als Tastelement, der an einen Zinken eines Stimmgabelquarzes angeklebt ist, und zwar so, daß die Längsachse des Glasstabs parallel zur Schwingungsrichtung des Stimmgabelquarzes ausgerichtet ist.

Im deutschen Gebrauchsmuster 69115942.3 ist ebenfalls ein solcher Taster mit einem Festkörperschwingen beschrieben. Der Taster steht in Verbindung mit einem Komparator, von dem in Abhängigkeit von der Schwingungsamplitude des Schwingers ein Signal mit den Signalzuständen "Schwingt" und "Schwingt nicht" abgegeben wird. Die Meßwertübernahme erfolgt beim wechsel vom Zustand "schwangt" in den Zustand "Schwangt nicht".

Ein Problem beim Arbeiten mit dem eingangs genannten Taster ist die Gewinnung von Signalen, die eindeutig und zuverlässig den Kontakt des Tastelements mit dem zu vermessenden Werkstück an die Steuerung des Koordinatenmeßgerätes melden. Wird dieser Zeitpunkt nicht eindeutig und reproduzierbar festgestellt, so erhöht dies die Antastunsicherheit des Tasters. Die in dem deutschen Gebrauchsmuster 92 13 059 beschriebene Schaltung liefert zwar schon brauchbare Ergebnisse. Dennoch reagiert sie recht empfindlich auf äußere Störungen. Beispielsweise wird die Meßwertübernahme durch Turbulenzen in der Luft beeinflußt. Wenn solche Störungen kurz vor dem Berühren der Werkstückoberfläche auftreten, werden sie nicht eindeutig als Störungen erkannt und liefern einen falschen Koordinatenmeßwert, d.h. tragen zu einer erhöhten Antastunsicherheit bei.

Es ist deshalb die Aufgabe der Erfindung, bei einem Koordinatenmeßgerät mit einem Taster des eingangs genannten Typs diesen so anzuordnen oder zu beschalten, daß sich gleiche möglichst niedrige Antastunsicherheiten in den drei Meßrichtungen x, y und z zuverlässig ergeben.

Diese Aufgabe wird für ein Koordinatenmeßgerät mit einem Taster in Form eines Festkörperschwingers, an dem ein dünner Stab als Tastelement angebracht ist, mit dem in Anspruch 1 angegebenen Maßnahmen gelöst.

Die Zuverlässigkeit und Antastunsicherheit des eingangs genannten Tasters lassen sich durch eine Elektronik verbessern, die mindestens zwei verschiedene, die Berührung des Tastelementes mit dem zu vermessenden Werkstück charakterisierende Signale erzeugt. Mit Hilfe der beiden im Antastfalle in Koinzidenz auftretenden Signale lassen sich Störungen, die zu Fehlantastungen führen, wirkungsvoll erkennen und unterdrücken. Es wird in dieser Stelle ausdrücklich auf die von der Anmelderin am gleichen Tage eingereichte Anmeldung EP-A-0 643 280 mit dem Titel "Koordinatenmeßgerät mit einem Tastkopf und einer Elektronik zur Verarbeitung des Tastsignals" Bezug genommen. In dieser Anmeldung sind, wenn auch für einen anderen Tastertyp, detaillierte Ausführungsbeispiele für die Ausgestaltung einer zuverlässig und funktionssicheren Elektronik zur Verarbeitung eines Tastsignals angegeben.

Weitere Vorteile der Erfindung ergeben sich aus der nachstehenden Beschreibung von Ausführungsbeispielen anhand der Figuren 1-4 der beigefügten Zeichnungen.
- Figur 1: ist eine vereinfachte Prinzipsskizze, die den Fall der Ausrichtung der Schwingungsrichtung S des Festkörperschwingers parallel zu einer Meßrichtung (Z) darstellt;
- Figur 2: ist eine Prinzipsskrizze, die die wesentlichsten Komponenten der an den Festkörperschwinger angeschlossenen Auswerte-Elektronik zeigt;
- Figur 3: ist ein Blockschaltbild des an den Festkörperschwinger angeschlossenen Elektronikteils (30) in Figur 2;
- Figur 4: ist eine Skizze, die den zeitlichen Verlauf der Schwingungsamplitude des Festkörperschwingers während eines Antastvorgangs veranschaulicht.

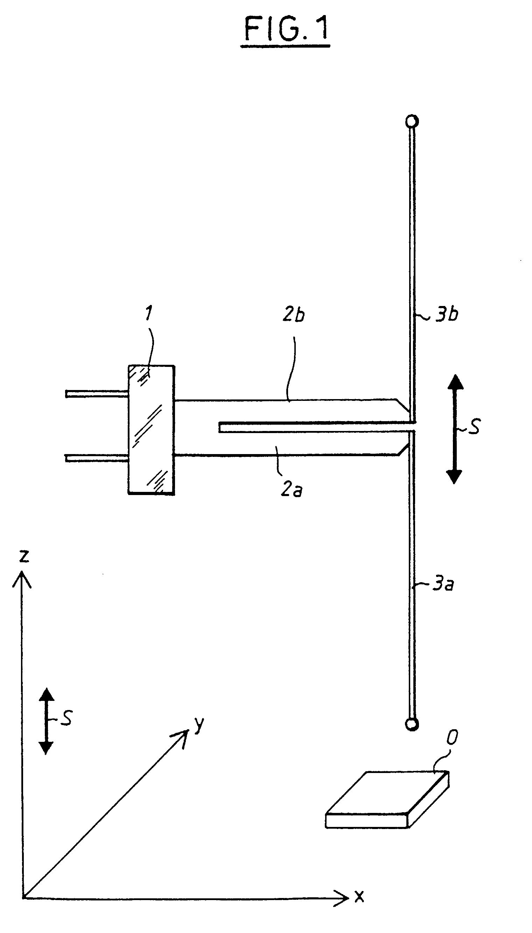

In der Figur 1 ist ein sogenannter Schwingquarz-Taster dargestellt, wie er in ähnlicher Weise im deutschen Gebrauchsmuster 92 13 059 beschrieben ist. Als Festkörperschwinger dient ein Stimmgabelquarz der beispielsweise auch in Quarzuhren verwendet wird. Dabei sitzt der eigentliche gabelförmige Quarz in einer Fassung (1) mit den elektrischen Anschlüssen und an das vordere Ende jeder Zinke der Gabel ist ein dünner Glasstab (3a) bzw. (3b) angeklebt. Während der eine Glasstab (3a) mit der an seinem vorderen Ende angeschmolzenen Kugel das eigentliche Tastelement bildet, dient der zweite an dem anderen Zinken (2b) des Quarzes angeklebte, gleichgroße und gleichschwere Stab (3b) zur Symmetrisierung des Schwingers.

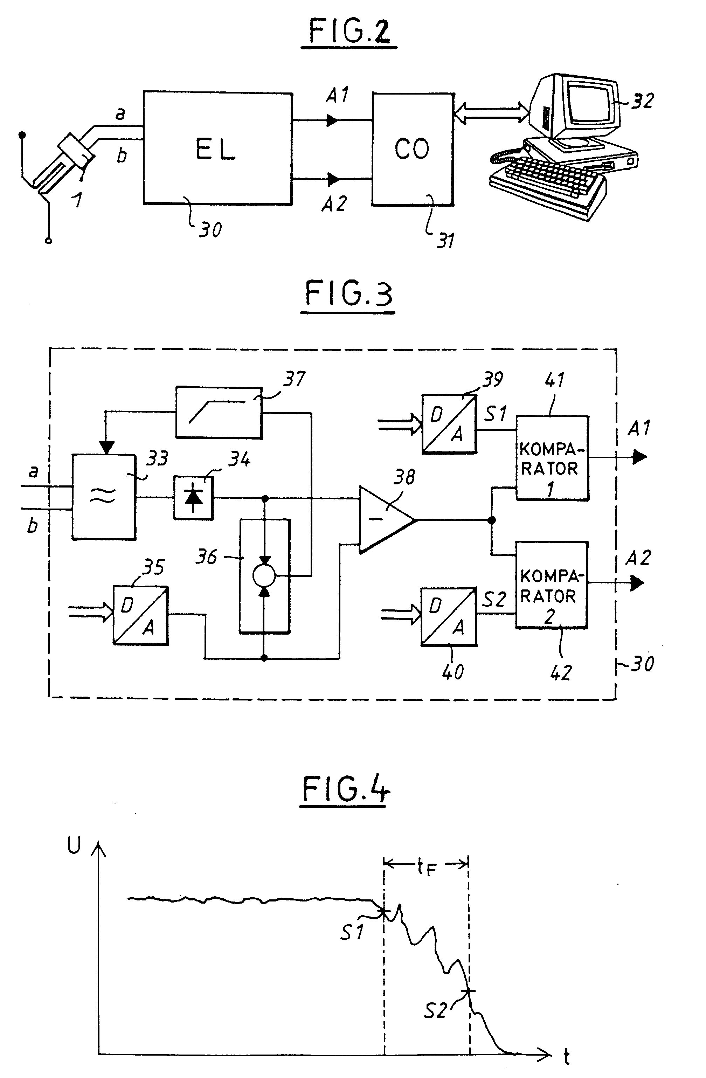

Wie aus Figur 2 hervorgeht ist der Festkörperschwinger mit den Anschlußdrähten an seiner Fassung (1) über die Leitungen a und b an eine Elektronik (30) angeschlossen. Diese Elektronik (30) enthält wie noch in Verbindung mit Figur 6 ausgeführt wird eine Oszillatorschaltung zur Aufrechterhaltung der Schwingung des Tastelements sowie Komperatoren, von denen zwei verschiedene Signale A1 und A2 generiert werden, wenn das Tastelement das zu vermessende Werkstück berührt. Die beiden Signale A1 und A2 sind beide der Steuerung (31) des Koordinatenmeßgerätes zugeführt, die ihrerseits über einen Datenbus mit dem Rechner (32) des Koordinatenmeßgerätes kommuniziert. Nicht dargestellt sind die Verbindungen der Steuerung (31) mit den Antrieben des Koordinatenmeßsystems sowie den Längenmeßsystemen, von denen die Position der beweglichen Meßschlitten des Koordinatenmeßgeräts in den drei Raumrichtungen x, y und z gemessen wird.

Die Oszillatorschaltung ist in Figur 3 mit (33) bezeichnet. Über sie wird der Festkörperschwinger, d.h. der Stimmgabelquarz bei einer konstanten Frequenz betrieben. Weiterhin ist eine Regelschaltung vorgesehen, über die die Amplitude der Schwingung konstant gehalten wird. Diese Schaltung besteht aus einem Regler (36), dem als Führungsgröße das Ausgangssignal eines Digital-Analogwandlers (35) zugeführt ist. Dieser Sollwert läßt sich entweder auf der Elektronikplatine (30) über geeignete Dip-Schalter manuell oder mit Hilfe eines Mikroprozessors beispielsweise von der Steuerung (31) oder dem Rechner (32) aus vorgeben. Der Regler (36) vergleicht das Ausgangssignal des Digital-Analogwandlers (35) mit dem Istwert des von einem Gleichrichter (34) gleichgerichteten Signals der OszillatorSchaltung (33), d.h. mit der Amplitude der Schwingung des Quarzes. Das entsprechende vom Regler (36) ausgegebene Regelsignal ist über einen Begrenzer (37) auf die Oszillatorschaltung (33) rückgekoppelt. Mit diesen Maßnahmen wird erreicht, daß die Amplitude der Schwingung des Festkörperschwingers bei Annäherung an die Oberfläche des zu vermessenden Werkstücks solange konstant bleibt, bis die Grenzspannung des Begrenzers (37) erreicht ist. Zu diesem Zeitpunkt beginnt die Amplitude der Schwingung bei weiterer Annäherung an die Objektoberfläche aufgrund der immer stärker werdenden Dämpfung abzufallen bis die Schwingung schließlich ganz erlischt. Dieser zeitliche Verlauf der Schwingung während eines Antastvorganges ist in Figur 4 beispielhaft skizziert.

Zu Gewinnung eines Tastsignals ist der Ausgang des Gleichrichters (34) mit einem Differenzverstärker (38) verbunden, dessen anderer Eingang ebenfalls an dem Digital-Analogwandler (35) angeschlossen ist. Der Ausgang des Differenzverstärkers (38) ist den Eingängen zweier Komparatoren (41 und 42) zugeführt. Deren Schwellen lassen sich ebenfalls digital über einen Mikroprozessor oder über Dip-Schalter auf der Platine der Schaltung (30) nach Figur 3 digital einstellen, wobei zwei Digital-Analogwandler (39) und (40) die eingestellten Schwellwerte auf die Analogeingänge der Komparatoren (41) und (42) umsetzen.

Der Schwellwert des Komparators (41) ist so eingestellt, daß bereits ein Abfall der Schwingungsamplitude von 5 % den Komparator (41) durchschalten läßt und das erste Antastsignal A1 erzeugt. Mit diesem Signal werden die Zählerstände der Längenmeßsysteme des Koordinatenmeßgerät eingefroren. Dieses Signal definiert den Antastzeitpunkt.

Die Schwelle S2 des Komparators (42) hingegen ist auf einen niedrigen Wert von beispielsweise 40 % der Signalamplitude der Schwingung eingestellt. Entsprechend liefert der Komparator (2) ein Signal auf der Leitung A2 zu einem späteren Zeitpunkt, wenn die Schwingung im Zuge des Antastvorganges stärker gedämpft wird.

Der zeitliche Verzug zwischen den beiden Signalen hängt von der Antastgeschwindigkeit ab und wird vom Mikroprozessor in der Steuerung (31) auf zeitliche Koinzidenz innerhalb eines mit der Antastgeschwindigkeit korrellierten Zeitfensters t_{F} abgeprüft. Nur bei gleichzeitigem Auftreten innerhalb des genannten Zeitfensters wird eine Antastung gültig gegeben, wobei dann die bereits beim ersten Auftreten des Signals auf der Leitung A1 eingefrorenen Zählerstände als Antastkoordinaten übernommen werden.

Im beschriebenen Ausführungsbeispiel erfolgt die Ableitung der Signale Al und A2 mit Hilfe von Komparatoren aus der Amplitude der Schwingung des Festkörperschwingers. Es ist jedoch auch möglich, die Frequenzverschiebung aufgrund der stärker werdenden Dämpfung des Tastelementes beim Antastvorgang auszuwerten, auch in Kombination mit der Auswertung der Schwingungsamplitude. In diesem Falle ist es zweckmäßig, digital einstellbare Frequenzfilter in der Auswerteelektronik vorzusehen. Ebenso kann es zweckmäßig sein, die Grenzspannung des Begrenzers (37) auf die jeweilige Meßaufgabe bezogen einstellbar zu machen denn diese Grenzspannung definiert in erster Linie den Kontakt des Tastelements mit dem zu vermessenden Werkstück.

Schließlich ist es auch möglich, zur Bestimmung des exakten Antastzeitpunkts den gesamten zeitlichen Verlauf der Schwingungsamplitude und/oder Frequenz während eines Antastvorganges aufzuzeichnen und mit gespeicherten Signalverläufen zu vergleichen, um daraus die exakten Antastkoordinaten abzuleiten. Die entsprechende Vorgehensweise ist in der DE-OS 42 04 602 beschrieben, auf die an dieser Stelle ausdrücklich Bezug genommen wird.

## Patentansprüche

1. Koordinatenmeßgerät mit einem Taster in Form eines Festkörperschwingers (1/2) an dem ein dünner Stab als Tastelement angebracht ist, wobei der Festkörperschwinger an eine Oszillatorschaltung (33) einer Elektronik (30) angeschlossen ist, die mindestens zwei unterschiedliche, die Berührung des Tastelements mit dem zu vermessenden Werkstück charakterisierende Signale (A1, A2) erzeugt, wobei aus den Signalen die Antastkoordinaten abgeleitet werden und eine Antastung nur dann gültig gegeben wird, wenn beide Signale gleichzeitig innerhalb eines mit der Antastgeschwindigkeit korrelierten Zeitfensters auftreten.

2. Koordinatenmeßgerät nach Anspruch 1, wobei die Signale durch Komparatoren (41, 42) generiert werden, von denen die Schwingungsamplitude oder Frequenz des Festkörperschwingers mit mindestens zwei verschiedenen, einstellbaren Schwellwerten (S1, S2) verglichen wird.

3. Koordinatenmeßgerät nach Anspruch 1, wobei die Signale von einem Mikroprozessor erzeugt werden, der den zeitlichen Verlauf der Amplitude und/oder Frequenz des Festkörperschwingers mit einem gespeicherten Mustersignalverlauf korreliert.

4. Koordinatenmeßgerät nach Anspruch 2, wobei die Schwellwerte und weitere Parameter der Tastsignalverarbeitung digital von einem Mikroprozessor einstellbar sind.

5. Koordinatenmeßgerät nach Anspruch 4, wobei mindestens einer der folgenden weiteren Parameter digital einstellbar ist: die Grenzspannung eines an die Oszillatorschaltung angeschlossenen Begrenzers (37), die zulässige Dauer, Reihenfolge oder Zeitabstände der beiden Signale (A1, A2), die Charakteristik eines oder mehrerer Frequenzfilter für das Tastsignal.

## Claims

1. Coordinate measuring apparatus having a probe in the form of a solid-state oscillator (1/2) on which a thin rod is mounted as a probe element with the solid-state oscillator being connected to an oscillator circuit (33) of an electronic circuit (30) which generates at least two different signals (A1, A2) characterizing the contact of the probe element with the workpiece to be measured wherein the coordinate values of the contact procedure are derived from said signals and a contact is declared to be valid only if both signals occur simultaneous within a time window correlated to the contact velocity.

2. Coordinate measuring apparatus of claim 1, wherein the signals are generated by comparators (41, 42) of which the vibration amplitude or frequency of the solid-state oscillator is compared to at least two different adjustable threshold values (S1, S2).

3. Coordinate measuring apparatus of claim 1, wherein the signals are generated by a microprocessor which correlates the time-dependent trace of the amplitude and/or frequency of the solid-state oscillator to a stored model signal trace.

4. Coordinate measuring apparatus of claim 2, wherein the threshold values and further parameters of the probe signal processing are adjusted digitally by a microprocessor.

5. Coordinate measuring apparatus of claim 4, wherein at least one of the following additional parameters is digitally adjustable: the limit voltage of a limiter (37) connected to the oscillator circuit, the permissible duration, sequence or time intervals of the two signals (A1, A2), the characteristic of one or several frequency filters for the probe signal.

## Revendications

1. Machine de mesure de coordonnées dotée d'un palpeur en forme d'oscillateur solide (1/2) portant une mince tige servant d'élément de palpage, où l'oscillateur solide est connecté à un circuit d'oscillateur (33) d'une électronique (30), qui produit au moins deux signaux différents (A1, A2) caractérisant le contact de l'élément de palpage avec la pièce à mesurer, les coordonnées du point palpé étant déduites desdits signaux et un palpage n'étant validé que lorsque les deux signaux sont générés à l'intérieur d'un laps de temps déterminé en corrélation avec la vitesse de palpage.

2. Machine de mesure de coordonnées selon la revendication 1, où les signaux sont générés par des comparateurs (41, 42) qui comparent l'amplitude d'oscillation ou la fréquence de l'oscillateur solide avec au moins deux seuils réglables différents (S1, S2).

3. Machine de mesure de coordonnées selon la revendication 1, où les signaux sont générés par un microprocesseur qui met en corrélation l'évolution dans le temps de l'amplitude et/ou de la fréquence de l'oscillateur solide avec une variation-type des signaux mise en mémoire.

4. Machine de mesure de coordonnées selon la revendication 2, où les seuils et autres paramètres de traitement des signaux sont réglables par voie numérique à partir d'un microprocesseur.

5. Machine de mesure de coordonnées selon la revendication 4, où l'un au moins des autres paramètres suivants est réglable par voie numérique: la tension limite d'un limiteur (37) connecté au circuit d'oscillateur, la durée, la suite ou les décalages admissibles des deux signaux (A1, A2), la caractéristique d'un ou de plusieurs filtres de fréquence pour le signal de palpage.
